# EUROPEAN PATENT APPLICATION

(11) **EP 0 894 594 A2**
(43) Date of publication of application: **03.02.1999**
(21) Application number: 98113685.6
(22) Date of filing: 22.07.1998
(51) Int. Cl.: B29B 9/06, B29C 47/36

(54) **Process for producing granulated material or molded product of vinyl chloride-based resin**

(30) Priority: 24.07.1997 JP 198929/97; 30.09.1997 JP 266026/97
(71) Applicant: Mitsubishi Chemical MKV Company, Tokyo 108-0014 (JP)
(72) Inventor: Yamamori, Masaji, Nagoya-shi, Aichi-ken (JP)
(74) Representative: Hansen, Bernd, Dr. Dipl.-Chem.

(57) **Abstract**

The present invention relates to a process for producing a granulated material or a molded product comprising a vinyl chloride-based resin, comprises:
feeding, under pressure, a powder of vinyl chloride-based resin composition into a gear pump unit in an unmolten state;
kneading the vinyl chloride-based resin composition in said gear pump unit while applying a shear force thereto; and
subjecting the vinyl chloride-based resin composition to extrusion-granulation or direct extrusion-molding.

Such process of the present invention is capable of being at a low temperature to obtain a molded product having excellent surface appearance and excellent properties.

## Description

### BACKGROUND OF THE INVENTION:

The present invention relates to a process for producing a granulated material or molded product made of vinyl chloride-based resin, and more particularly, to a process for producing a granulated material or molded product made of vinyl chloride-based resin, which process enables a powder of a vinyl chloride-based resin composition to be extrusion-granulated or directly extrusion-molded at a low temperature while imparting a shear force thereto without melting.

Vinyl chloride-based resins have been usually used in the form of a granulated material, i.e., so-called pellets obtained by granulating a powder of a vinyl chloride-based resin composition (dry blend), which composition is prepared by uniformly mixing a raw resin powder with various additives such as heat stabilizer or the like in order to improve various properties thereof such as heat resistance, weather resistance or impact resistance. It is also known that a vinyl chloride-based resin granulated material subjected to less heat history and kneaded with a sufficient shear force upon the production thereof, can be molded at a low temperature and a molded product thereof is excellent in surface appearance and various properties. Accordingly, it has been demanded to provide a vinyl chloride-based resin granulated material which are sufficiently kneaded at a low temperature during the production thereof. For example, a molded product produced from a vinyl chloride-based resin composition sufficiently kneaded at a low temperature, is excellent in not only appearance but also various properties such as falling dart impact strength since the molded product can exhibit a ductile fracture upon breaking.

The vinyl chloride-based resin granulated material has been produced, for example, by a method of kneading a dry blend comprising vinyl chloride-based resin, e.g., by a Banburry mixer and then forming the kneaded stock comprising vinyl chloride-based resin into a sheet by a mill roll, followed by cutting the sheet; a method of kneading a dry blend comprising vinyl chloride-based resin in an extruder and extruding the kneaded stock into a strand or sheet, followed by cooling and cutting the strand or sheet; a method of hot-cutting an extruded strand from a kneaded stock comprising vinyl chloride-based resin with a cutter blade on a surface of an extrusion die while extrusion; or the like.

However, in the above mill-rolled sheet-cutting method, although the vinyl chloride-based resin is advantageously kneaded at a relatively low temperature, there arises such a problem that impurities such as dust or dirt are incorporated into the stock during the roll-kneading. Also, in the sheet-cutting method as well as the strand-cutting method, there arise environmental and hygienic problems that not only dust but also noise are generated upon cutting. Further, in the case of the melt-extrusion using an extruder, if the discharge amount therefrom is increased in order to enhance the productivity, the resin temperature is necessarily raised, so that a reverse flow of the molten resin, especially those resins having a low viscosity, is disadvantageously caused when the pressure applied thereto is increased by the operation of screw, resulting in failing to stabilize the discharge pressure and discharge amount. Further, when the thus produced granulated material is molded, a relatively high molding temperature is required. As a result, in the case of profile extrusion-molding process, the obtained molded product exhibits a deteriorated shape retention property, and causes a brittle fracture upon breaking. Further, in the case of low-temperature molding process, the obtained molded product is unsatisfactory in various properties such as falling dart impact strength or the like.

It is also known that gear pumps have been used to discharge a molten resin from a polymerization vessel for olefin-based resins, styrene-based resins, amide-based resins or the like and pelletize these resins. Further, for example, in Japanese Patent Applications Laid-open (KOKAI) Nos. 7-276468(1995) and 9-141726(1997), there have been described extrusion-molding processes using gear pumps. However, any of the gear pumps described in these prior arts has been used merely for enhancing the effect of kneading vinyl chloride-based resins or chlorinated vinyl chloride-based resins which are melt-kneaded in a screw extruder, or for raising a pressure applied to resins. That is, conventionally, there is not described such method of mixing and kneading a powder of a vinyl chloride-based resin composition at a low temperature, and extrusion-molding the mixed and kneaded powder using gear pumps.

Further, it is also known a method of using a conical type counter-rotating twin-screw extruder to obtain a extrusion-molded product directly from a powder of a vinyl chloride-based resin composition. Although this method is effective to maintain a low stock temperature, there is caused such a problem that the resultant molded product exhibits insufficient strength, since a sufficient shear force cannot be applied to the resin.

As a result of the present inventor's earnest studies for producing a vinyl chloride-based resin granulated material capable of forming a molded product or for extrusion-molding a powder of a vinyl chloride-based resin composition to form the molded product, which molded product has an excellent surface appearance and excellent properties, by applying a sufficient shear force to the powder of the vinyl chloride-based resin composition at a low temperature without increasing a stock temperature thereof, it has been found that by feeding under pressure the powder of vinyl chloride-based resin composition into at least one gear pump as it is, and kneading the powder of vinyl chloride-based resin composition in the gear pump while applying a shear force thereto, it becomes possible to produce the molded product having an excellent surface appearance and excellent properties, directly from the powder of vinyl chloride-based resin composition; and the vinyl chloride-based resin granulated material which enables to obtain the molded product having the above-mentioned excellent properties. Further, it has been found that when at least two gear pumps are connected in series to each other, the resin temperature is prevented from being raised during passing through the gear pump, and increases only when the resin composition reaches a discharge port of a finally connected gear pump. The present invention has been attained based on the findings.

### SUMMARY OF THE INVENTION:

It is an object of the present invention to provide a process for producing a vinyl chloride-based resin granulated material capable of being molding at a low temperature to obtain a molded product having an excellent surface appearance and excellent properties.

It is another object of the present invention to provide a process for producing a molded product comprising a vinyl chloride-based resin, which process enables a powder of vinyl chloride-based resin composition to be kneaded and extrusion-molded at a low temperature without subjecting the resin composition to heat history to obtain such a molded product having a good shape retention property upon extrusion-molding and exhibiting excellent surface appearance and properties.

To accomplish the aim, in an aspect of the present invention, there is provided a process for producing a granulated material or a molded product comprising a vinyl chloride-based resin, which process comprises:
feeding under pressure, a powder of a vinyl chloride-based resin composition into a gear pump unit in an unmolten state;
kneading the vinyl chloride-based resin composition in the gear pump unit while applying a shear force thereto; and
subjecting the vinyl chloride-based resin composition to extrusion-granulation or direct extrusion-molding.

In a second aspect of the present invention, there is provided a process for producing a granulated material or a molded product comprising a vinyl chloride-based resin, which process comprises:
feeding under pressure, a powder of a vinyl chloride-based resin composition into at least two gear pump units in an unmolten state;
kneading the vinyl chloride-based resin composition in the gear pump units while applying a shear force thereto; and
subjecting the vinyl chloride-based resin composition to extrusion-granulation or direct extrusion-molding

### BRIEF DESCRIPTION OF THE DRAWINGS:

Fig. 1 is a cross sectional view of a granulating apparatus used in a process according to the present invention;
Fig. 2 is a cross sectional view of another granulating apparatus used in a process according to the present invention; and
Fig. 3 is a cross sectional view of a molding apparatus used in a process according to the present invention.

### DETAILED DESCRIPTION OF THE INVENTION:

The powder of the vinyl chloride-based resin composition used in the present invention may be in the form of a dry blend comprising the vinyl chloride resin powder or vinyl chloride copolymer powder composed mainly of vinyl chloride, and various additives ordinarily used for these resins, e.g., heat stabilizers, impact modifiers, processing aids, lubricants, fillers, plasticizers, heat resistance-modifying agents, anti-oxidants, ultraviolet-absorbing agents, anti-static agents, foaming agents, fire retardants, pigments, anti-microbials or the like. The process of the present invention is especially useful in rigid vinyl chloride-based resin compositions containing less or no amount of plasticizers.

In addition, as the vinyl chloride resins and the vinyl chloride copolymers, there may be used any of vinyl chloride resins and vinyl chloride copolymers produced by ordinary methods such as a suspension polymerization method, a mass polymerization method, a microsuspension polymerization method or an emulsion polymerization method. Incidentally, the powder of vinyl chloride-based resin composition have an average particle diameter of usually not more than 500 µm.

The "granulated material" according to the present invention means the powder having an average particle diameter of usually 1 to 10 mm, preferably 2 to 5 mm.

The "molded products" according to the present invention are not particularly restricted, and may include sheets or pipes produced by extrusion-molding, and profile extrusion-molded products having complicated cross-sectional shapes.

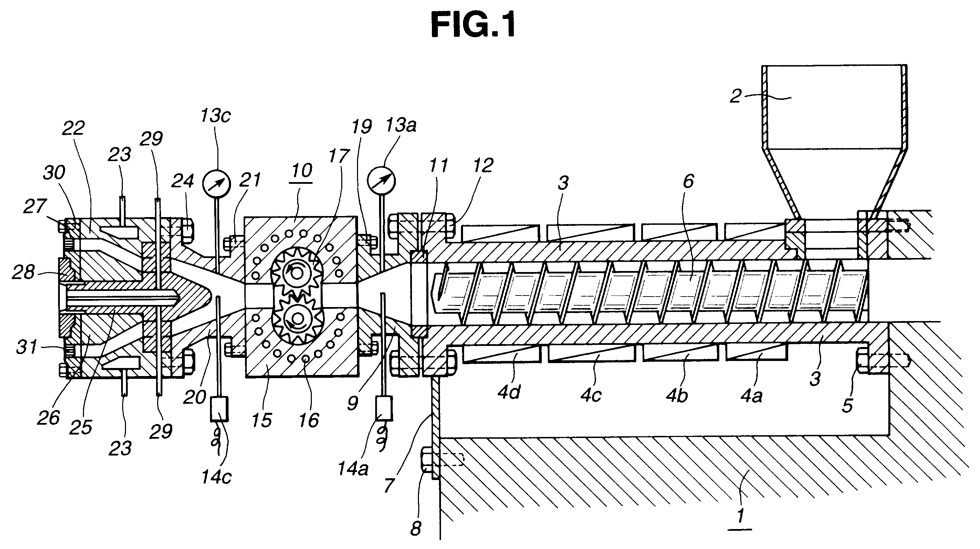

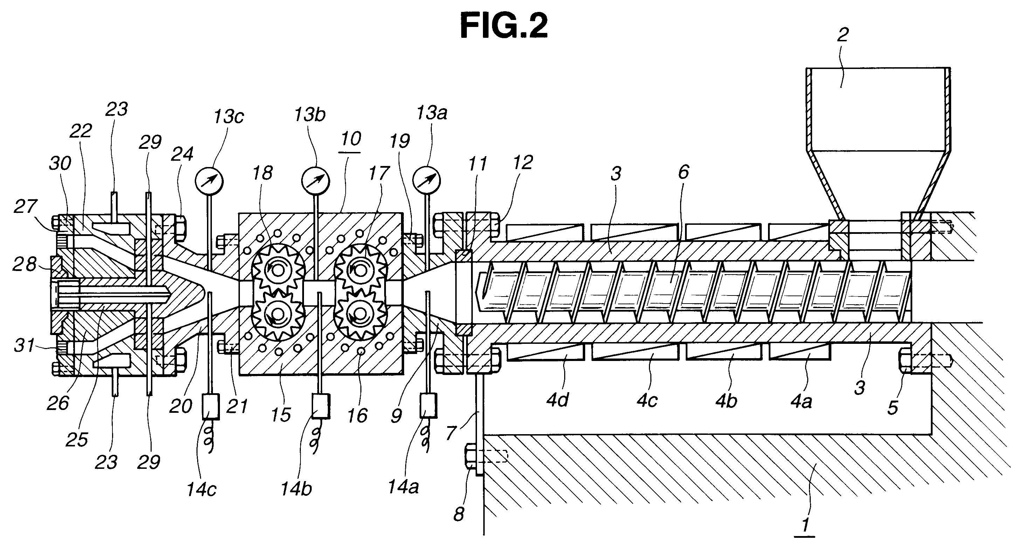

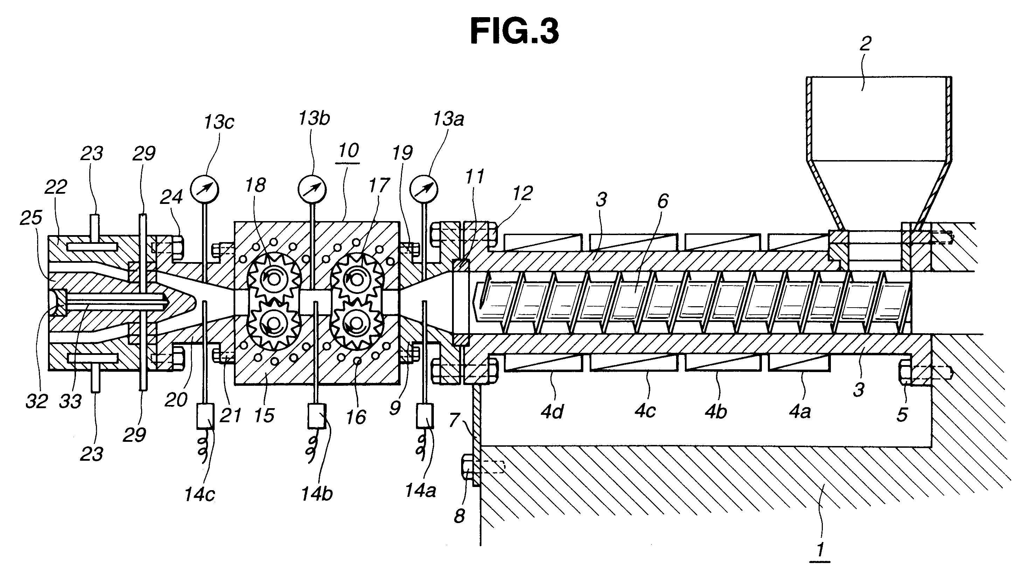

Next, an extrusion-granulating apparatus and an extrusion-molding apparatus used in the process of the present invention are explained below with reference to the accompanying drawings. Figs. 1 and 2 are cross-sectional views showing typical examples of extrusion-granulating apparatuses according to the present invention, and Fig. 3 is a cross-sectional view showing a typical example of an extrusion-molding apparatus used for molding pipes, according to the present invention. The extrusion-granulating apparatus and the extrusion-molding apparatus respectively shown in Figs. 2 and 3, are equipped with two gear pumps which are connected in series to each other. The extrusion-granulating apparatuses and the extrusion-molding apparatus as shown in Figs. 1 to 3, comprise commonly a powder transporting device 1 (extruder), a hopper 2, a cylinder 3, heaters 4a, 4b, 4c and 4d, a bolt 5 for securing the cylinder 3 to the body of powder transporting device 1, a screw 6, a bracket 7 for supporting the cylinder 3, a fastening bolt 8 for securing the bracket 7 to the body of powder transporting device 1, an adapter 9, a gear pump unit 10, a breaker plate 11 and connecting bolts 12 and 19. The cylinder 3 and the gear pump unit 10 are connected through the adapter 9 and tightened together by the connecting bolts 12 and 19. The breaker plate 11 is interposed between the cylinder 3 and the adapter 9. The shape of the breaker plate is not particularly restricted, and may be appropriately determined depending upon kinds of a powder of vinyl chloride-based resin composition. The breaker plate 11 may be usually of a ring or honeycomb shape.

In the extrusion-granulating and extrusion-molding apparatuses used in the present invention, there are further arranged resin pressure gauges 13a to 13c, resin temperature gauges 14a to 14c, a gear pump housing 15, a temperature regulating mechanism 16, a pair of gears 17 for the first gear pump, a pair of gears 18 for the second gear pump, a die adapter 20 and die adapter bolts 21. When the process of the present invention is conducted, it is preferred that at least two gear pumps, e.g., multiple gear pumps such as three or four gear pumps, may be connected in series to each other. By this arrangement of the multiple gear pumps, it becomes possible to more sufficiently apply a shear force to the powder of vinyl chloride-based resin composition transported therethrough.

In the case where not less than two gear pumps are arranged, the gear pairs 17 and 18 may be provided in a common housing 15, or in two or more separate housings connected to each other. The gear pump unit 10 is connected on its discharge side to the die adapter 20 and securely tightened thereto by the die adapter bolts 21. At intake and discharge ports of the gear pump unit 10, there are respectively arranged the resin pressure gauges 13a and 13c, and the resin temperature gauges 14a and 14c for measuring the pressure and temperature of the resin passing therethrough. These pressure and temperature gauges are mounted, for example, to the adapter 9 and the die adapter 20. As a matter of course, in the case where multiple gear pumps are connected in series to each other, it is preferred that the resin pressure gauges 13b, the resin temperature gauges 14b and the like are arranged between the adjacent gear pumps. The resin temperature is preferably measured at a center of a flow passage of stock. The temperature regulating mechanism 16 is usually constituted by circulating bores for a cooling or heating medium, to maintain a constant temperature of the vinyl chloride-based resin composition passing through the flow passage. It is preferred that the circulating bores are also provided in the gear pairs 17 and 18.

In the extrusion-granulating and extrusion-molding apparatuses according to the present invention, there are further arranged a die housing 22, a ring-like conduit 23 provided in the die housing for passing a cooling or heating medium therethrough, fastening bolts 24 for securing the die housing 22 to the die adapter 20, a torpedo-type center core 25, a center core sleeve 26, a die plate 27, a fastening bolt 28 for securing the die plate 27 to the die housing 22, a conduit 29 for passing a cooling or heating medium through the center core 25, fixing bolts 30, and die openings 31 provided in the die plate 27. The center core 25 is fitted into the center sleeve 26 inserted into the die housing 22, extends through the die plate 27 and is secured thereto by the die plate fastening bolt 28. The die plate 27 is secured to the die housing 22 at its outer periphery by the fixing bolts 30.

In the apparatus shown in Fig. 3, there are still further arranged a blank plug 32 fitted into the conduit 29 for passing a cooling or heating medium through the center core 25, and a diaphragm 33.

When the granulated material or molded product comprising vinyl chloride-based composition are produced by the process according to the present invention, blended powder (dry blend) such as preliminarily prepared rigid vinyl chloride-based resin composition are fed into the hopper 2 of the extruder 1. The rigid vinyl chloride-based resin composition is transported through the cylinder 3 maintained at a predetermined temperature by the screw 6, and then fed under pressure into the gear pump unit 10. The powder of vinyl chloride-based resin composition are preferably preheated during passing through the cylinder 3 up to such a condition immediately before reaching a semi-gelled state, as described in detail hereinafter.

In the process according to the present invention, it is necessary to feed the powder of vinyl chloride-based resin composition under pressure into the gear pump unit 10 in an unmolten state. That is, when passing through the extruder, the powder of vinyl chloride-based resin composition are transported towards the gear pump unit 10 by the screw while being compressed and preheated in the cylinder.

In general, an interior of an extruder is sectioned into a plurality of regions corresponding to respective parts of a screw, i.e., a feed region, a compression region, a melt and metering region and a mixing region from a base of the extruder immediately below the hopper toward a tip end thereof. In the process according to the present invention, there may be used extruders having only feed and compression regions, or even when an ordinary extruder is used, operations thereof are limited to those in feed and compression regions. Incidentally, the "unmolten state" used in the present invention means that the vinyl chloride-based resin composition are kept in such a condition between a compressed state attained in the compression region such that air is removed therefrom (compressed powder resin or rice flour cake-like resin), and a non-gelled or semi-gelled state before reaching a molten state, i.e., never reaching a completely gelled state (refer to "POLYVINYL CHLORIDE--CHEMISTRY AND INDUSTRY THEREOF" published by ASAKURA SHOTEN CO., LTD., the sixth edition, August 20, 1968, pp. 448 to 449).

The pressure of the resin composition fed into the gear pump unit 10, which is measured by the resin pressure gauge 13a (hereinafter refer to merely as "resin pressure 13a") is varied depending upon a capacity or a dwelling time of the gear pump used. The resin pressure 13a is usually not more than 80 kg/cm², preferably 15 to 50 kg/cm², and may be appropriately controlled by varying a rotating speed of the gear pair 17. The vinyl chloride-based resin composition to be fed under pressure into the gear pump unit 10 may be transported up to the gear pump unit in the form of a compressed resin (rice flour cake-like resin), as long as the resin pressure 13a is usually maintained at not more than 50 kg/cm² and the temperature measured by the resin temperature gauge 14a (hereinafter refer to merely as "resin temperature 14a") is usually maintained at not more than 160°C, though values of the resin pressure and the resin temperature are varied upon an average degree of polymerization of the vinyl chloride resin used.

In the gear pump unit 10, the vinyl chloride-based resin composition is forced into a groove of the pair of gears 17, and moved along an inner wall surface of the gear pump housing 15 while controlling the temperature thereof to a predetermined value by the temperature regulating mechanism 16. The gear pair 18 of the following gear pump may be operated in the same manner as the gear pair 17.

At the discharge ports of the respective gear pumps, the vinyl chloride-based resin composition is kneaded while applying a shear force thereto by intermeshing action between the gear pair, and forcibly discharged towards the extrusion die housing 22, so that the resin pressure 13c, i.e., a die inner pressure, and the resin temperature 14c are increased. Incidentally, it is required that the temperature of the vinyl chloride-based resin composition is appropriately regulated by controlling the temperature regulating mechanism 16 of the gear pump and the rotating speed thereof such that the resin temperature 14c does not exceed a melting temperature thereof. With respect to the resin temperature rising percentage after passing through the gear pump, the vinyl chloride-based resin composition which is kept in a molten state before passing through the gear pump, exhibits a higher temperature rise after passing though the gear pump than that of the resin composition which is kept in a state of a compressed powder resin before passing through the gear pump.

In the case where not less than two pumps are connected in series to each other, the vinyl chloride-based resin composition can be more frequently exposed to a shear force, and a kneading effect imparted to the resin composition can be increased in proportion to the number of gear pumps. In the case where the gear pairs 17 and 18 have the same gear diameter, it is required that the rotating speed of the gear pair 17 is equal to or slightly smaller than that of the gear pair 18. It is preferred that the rotating speeds of the gear pairs 17 and 18 are identical to each other. When the rotating speed of the gear pair 17 is larger than that of the gear pair 18, the resin pressure 13b therebetween is increased. Even though a plurality of the gear pumps are connected in series to each other, when the rotating speeds thereof are identical to each other, only the resin pressure 13c and the resin temperature 14c at the discharge port of the finally connected gear pump are increased, but the resin pressures 13b and the resin temperatures 14b between adjacent gear pumps can be prevented from being increased. This phenomenon is an unexpected result. Thus, when a plurality of gear pumps are connected in series to each other, it becomes possible to apply a sufficient shear force to the vinyl chloride-based resin composition, thereby exhibiting a remarkable effect of kneading the resin composition. Accordingly, the use of multiple gear pumps connected in series to each other enables the vinyl chloride-based resin composition to be sufficiently mixed and kneaded at a low temperature.

When the granulated material is produced according to the present invention, the vinyl chloride-based resin composition is fed to the die housing 22 and extruded through the die openings 31 formed in the die plate 27 for the granulation thereof. As the granulation methods, there may be used a method of extruding the resin composition and simultaneously hot-cutting the extruded resin composition by using a cutter rotating along a surface of the die plate while contacting therewith; a method of extruding the resin composition into strands or sheets through the die openings and after cooling, cutting the extruded strands or sheets into a granulated material; or the like.

In the process according to the present invention, since the vinyl chloride-based resin composition fed to the extrusion die housing 22 is extruded in an unmolten state, the obtained molded product can exhibit an extremely excellent shape retention property, thereby readily obtaining molded products having aimed shapes. The extrusion-molded products obtained according to the present invention are not limited to sheets or pipes, and may also include profile extrusion-molded products having complicated cross-sectional shapes.

In the process according to the present invention, by using at least two gear pumps connected in series to each other and feeding the powder of vinyl chloride-based resin composition under pressure into the gear pump in an unmolten state, it becomes possible to apply a sufficient shear force thereto. When subjecting such a vinyl chloride-based resin composition to extrusion-granulating or extrusion-molding processes, there can be produced a granulated material or a molded product composed of the resin composition sufficiently kneaded at a low temperature without melting and capable of being molded at a low temperature. When the thus-produced granulated material are used to form a molded product or when a molded product is produced directly by extrusion-molding the resin composition, the obtained granulated material or molded products are free from thermal decomposition upon molding, and the resultant profile extrusion-molded products are excellent in shape retention property, appearance and various properties. Especially, it is recognized that the process according to the present invention is effectively applicable to those compositions containing lead-based stabilizers, which are usually difficult to mix and knead sufficiently.

Further, in the process according to the present invention, even though a plurality of gear pumps are connected in series to each other, almost no resin temperature rise due to the application of shear force is caused between the adjacent gear pumps, and only the resin temperature rise can be observed at the discharge port of the finally connected gear pump. Accordingly, in the process according to the present invention, by arranging a plurality of gear pumps connected in series to each other, there can be obtained the effect of sufficiently kneading the resin composition at a low temperature in proportion to the number of gear pumps, thereby providing unexpected and extremely excellent industrial granulating and molding processes.

Furthermore, the process according to the present invention is not only free from incorporation of impurities and generation of dust, but also can prevent noise from being generated, resulting in solving environmental problems.

### EXAMPLES:

The present invention will now be described in more detail with reference to the following examples, but the present invention is not restricted to those examples and various modifications are possible within the scope of the invention.

### Example 1:

A gear pump (gear diameter: 36 mm, gear blade width: 36 mm, discharge amount: 21 ml/rpm) and a die plate (orifice diameter: 3 mm, number of orifices: 66) were mounted to a single-screw extruder having a heating mechanism (65 mmφ, L/D: 25, screw compression ratio: 1:2.5), as shown in Fig. 1. The below-mentioned rigid vinyl chloride-based resin composition (powder) was fed into the single-screw extruder, extruded through the die plate and hot-cut under various conditions shown in Table 1 below, thereby producing a granulated material.

Incidentally, in the above production of the granulated material, the resin pressure (13a of Fig. 1) at an intake port of the gear pump was set to 50 kg/cm², and the ratio of the rotating speed of the screw to that of the gear pump was set to 1:1.4.

The resin temperature rise after passing through the gear pump and the gelation time of the obtained granulated material were measured to determine a moldability of the resin composition.

The gelation time of the granulated material was measured using a LABOPLASTO mill (manufactured by TOYO SEIKI CO., LTD.). In the measurement, the jacket temperature and the rotor rotating speed thereof were set to 170°C and 50 rpm, respectively.

### Formula of rigid vinyl chloride-based resin composition:

- Vinyl chloride resin (average degree of polymerization: 800): 100 parts by weight
- Tin-based stabilizer: 2.5 parts by weight
- Lubricant (stearic acid): 2 parts by weight
- Filler (calcium carbonate): 10 parts by weight
- Processing aid (acryl-based resin): 1.5 parts by weight

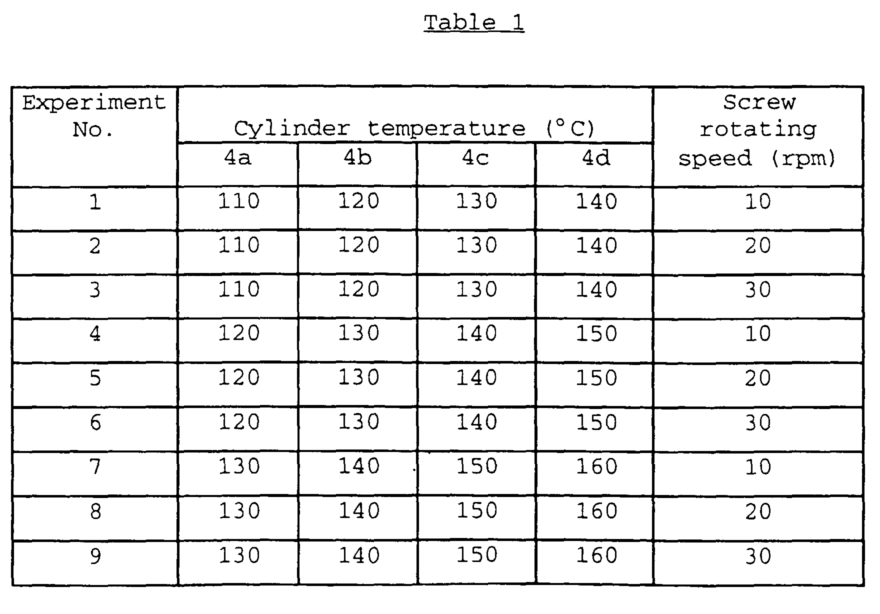

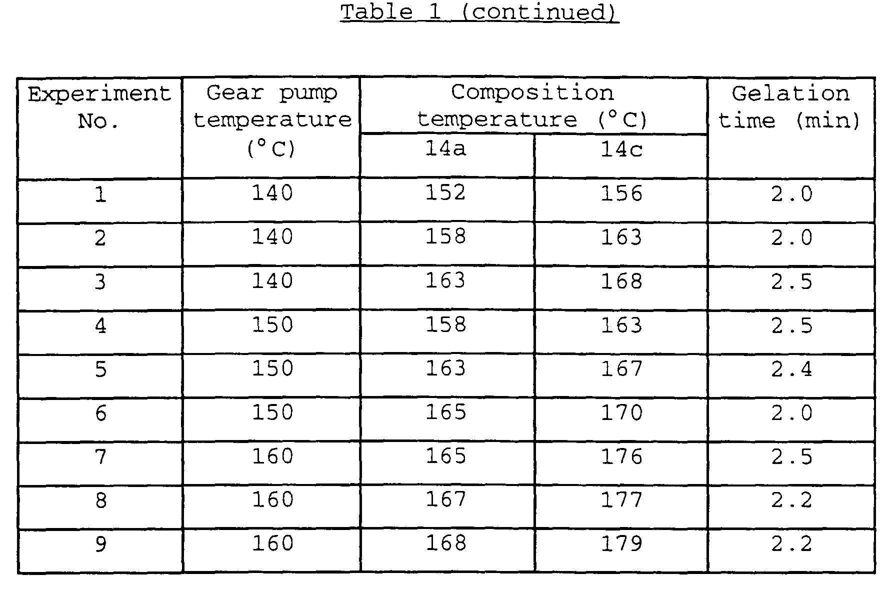

### Comparative Example 1:

The same procedure as defined in Example 1 was conducted except that the gear pump was excluded from the apparatus shown in Fig. 1, i.e., no gear pump was used, thereby producing a granulated material made of the rigid vinyl chloride-based resin composition. The temperature of the resin extruded was expressed by a value measured by the temperature gauge 14c.

The obtained granulated material was tested in the same manner as in Example 1. The results are shown in Table 2.

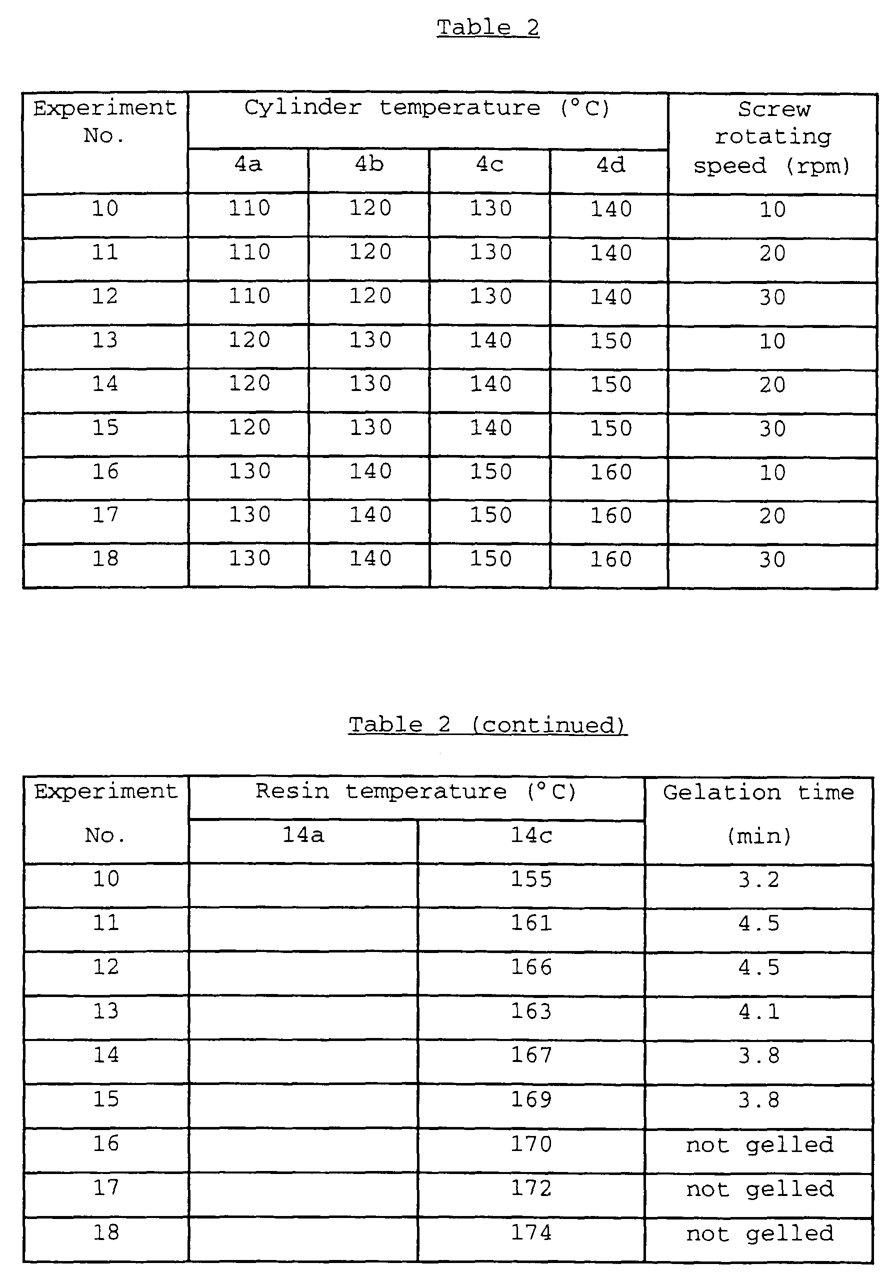

As is recognized from the results of Example 1 and Comparative Example 1, the powder of the rigid vinyl chloride-based resin composition at the intake port of the gear pump, was kept in a compressed resin state until the cylinder temperature reached 150°C, and in a non-gelled state when the cylinder temperature reached 160°C. When passing through the gear pump, the powder of the rigid vinyl chloride-based resin composition having a relatively low temperature at the intake port of the gear pump, exhibited only a slight temperature rise at a discharge port of the gear pump because the temperature control was conducted in the gear pump. On the other hand, the powder of the rigid vinyl chloride-based resin composition which was not passed through the gear pump, underwent an abrupt temperature rise due to back pressure thereof, immediately after the powder was discharged from the extruder. In order to prevent increase of the back pressure, it was required to raise the cylinder temperature to melt the vinyl chloride-based resin composition and enhance a fluidity thereof.

In addition, as is apparent from the results of Tables 1 and 2, the granulated material produced by the process according to the present invention, had a short gelation time and were capable of being molded at a low temperature, because the powder of the resin composition was sufficiently kneaded at a low temperature while applying a shear force thereto. On the other hand, the granulated material produced without passing through the gear pump, exhibited a longer gelation time and required a long period of time for melting nevertheless the granulation temperature thereof was relatively low, because the powder was not sufficiently kneaded. Further, it was recognized that the granulated material at a cylinder temperature of 160°C was unable to be gelled by the LABOPLASTO mill having a jacket temperature of 170°C. This indicates that the granulated material produced without using the gear pump were required to be molded at a high temperature.

### Example 2:

One or two gear pumps (gear diameter: 128 mm, gear blade width: 120 mm, discharge amount: 750 ml/rpm) and a die plate (orifice diameter: 3 mm, number of orifices: 600) were mounted to a single-screw extruder having a heating mechanism (GS-type, 180 mmφ, L/D: 6.5, screw compression ratio: 1:1.6; manufactured by BUSS Corp.), as shown in Figs. 1 and 2. The below-mentioned rigid vinyl chloride-based resin composition (powder) was fed into the single-screw extruder, extruded through the die plate and hot-cut under various conditions shown in Table 3 below, thereby producing a granulated material.

Incidentally, in the above production of the granulated material, the resin pressure (13a of Figs. 1 and 2) at an intake port of the gear pumps was set to not more than 30 kg/cm² to prevent heat generation in the extruder. The temperatures of the resin at respective portions of the gear pumps were measured to observe the resin temperature rise after passing through the gear pumps. The results are shown in Table 3.

### Formula of rigid vinyl chloride-based resin composition:

- Vinyl chloride resin (average degree of polymerization: 800): 100 parts by weight
- Lead-based stabilizer: 3.0 parts by weight
- Lubricant (stearic acid): 2.3 parts by weight
- Filler (calcium carbonate): 10 parts by weight
- Processing aid (acryl-based resin): 3.0 parts by weight

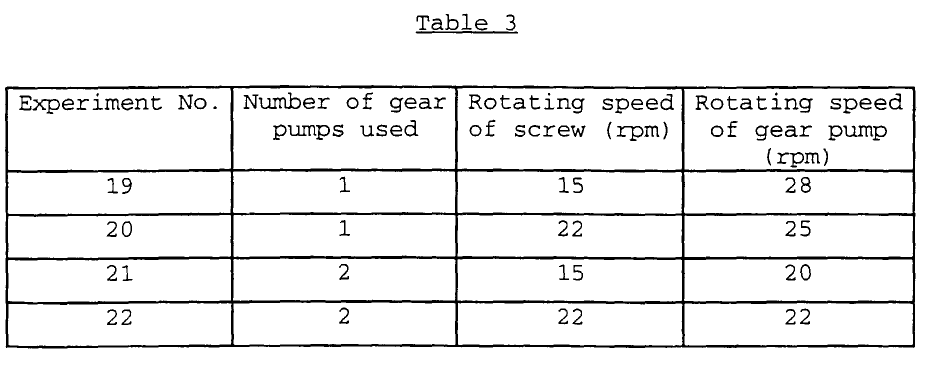

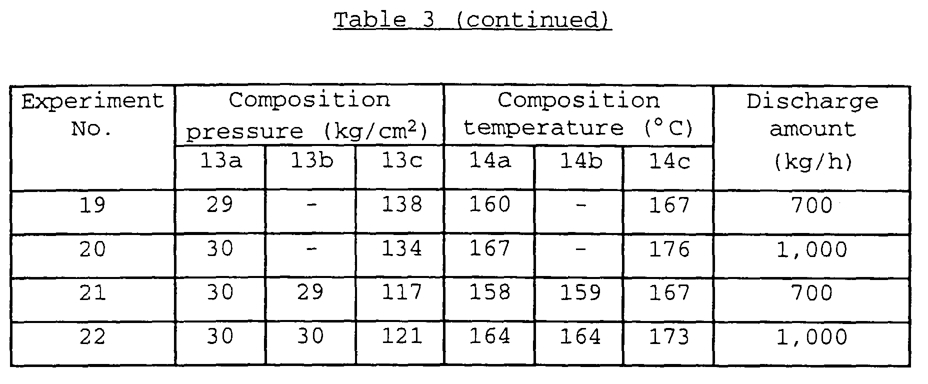

The above-produced granulated material comprising the vinyl chloride-based resin composition was measured for a gelation time thereof and then extruded to form a molded product. The thus produced molded product was observed with respect to its appearance and subjected to a falling weight impact test to evaluate properties of the granulated material. The results are shown in Table 4.

Incidentally, for comparative purposes, the granulated material produced in Experiment No. 16 which was not passed through the gear pump, was extruded to form a molded product.

The evaluation method is as follows.

### (1) Measurement of gelation time:

The gelation time of the granulated material was measured using a LABOPLASTO mill (manufactured by TOYO SEIKI CO., LTD.). The measurement was conducted at jacket temperatures of 160°C, 170°C and 180°C, and at a rotor rotating speed of 50 rpm.

### (2) Extrusion-molding method and observation of appearance:

An extrusion die was mounted to a 40 mmφ single-screw extruder. The granulated material was extruded at extrusion temperatures of 160°C, 170°C and 180°C to form strip molded products each having a thickness of 1 mm and a width of 30 mm. The appearances of the thus produced belt-like molded products were visually observed by eyes.

### Evaluation ratings:

- ⓞ:: extremely excellent
- ○:: good
- △:: slightly poor
- X:: poor

### (3) Falling weight impact test:

An 1/8-inch weight of 500 g was fallen from various heights on the belt-like molded products obtained at the respective extrusion temperatures in the above (2), according to JIS K7211. The weight-falling height at which the molded products were broken, are shown in Table 4.

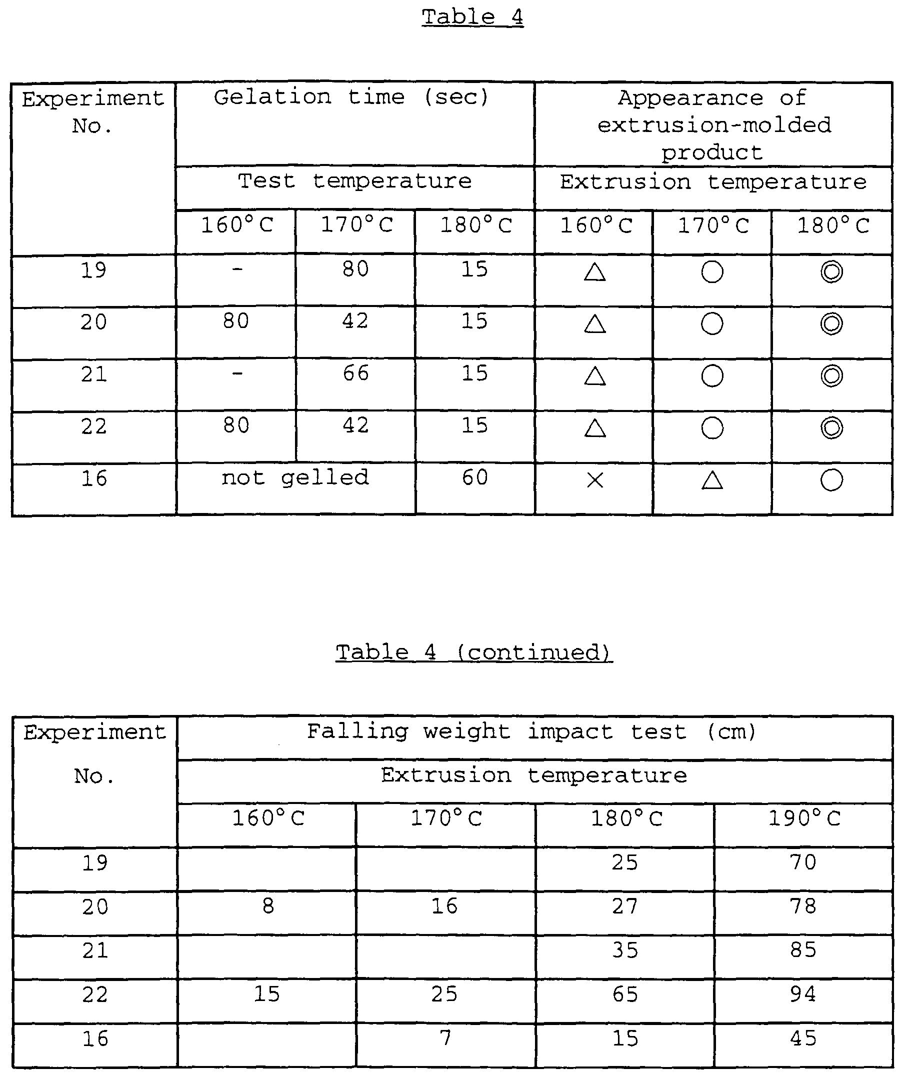

As is apparent from the results of Example 2, even though a plurality of gear pumps were connected in series to each other, no temperature rise of the resin composition between adjacent gear pumps was recognized, and the temperature rise was caused only at a discharge port of the finally connected gear pump. Accordingly, it was confirmed that the use of a plurality of gear pumps connected in series to each other was extremely useful to knead the vinyl chloride-based resin composition at a low temperature. In addition, in the case where a plurality of gear pumps are connected in series to each other, the resin pressure 13c at the discharge port of the finally connected gear pump was lower than that of the case where only a single gear pump was used. The reason therefor is considered such that a larger shear force in proportion to the number of gear pumps was applied to the resin composition, so that the resin composition was sufficiently kneaded and more readily passed through the die orifices, thereby reducing the resin pressure.

Further, it was clearly recognized that the granulated material by passing through the gear pumps exhibited a shorter gelation time and was able to be molded at a low temperature.

Furthermore, it was determined that in the case where two gear pumps are connected in series to each other, the obtained molded products were almost identical in their appearances but superior in falling dart impact strength to those granulated by passing through only one gear pump. The reason therefor is considered such that by passing through the two gear pumps connected in series to each other, the resin composition was more sufficiently kneaded while applying a shear force thereto.

The granulated material obtained in Experiment No. 16 which was produced by passing through no gear pump, was inferior in appearance of molded product and falling dart impact strength to the powder produced by passing through one or two gear pumps. In order to improve these properties, it was required to mold the powder at a higher temperature.

### Example 3 (Experiment No. 23):

Two gear pumps (gear diameter: 36 mm, gear blade width: 36 mm, discharge amount: 36 ml/rpm) and an extrusion die for profile extrusion of window frames were mounted to a single-screw extruder having a heating mechanism (65 mmφ, L/D: 25, screw compression ratio: 1:2.5; manufactured by MITSUBISHI HEAVY INDUSTRY, CO., LTD.), as shown in Fig. 3. A dry blend of the below-mentioned rigid vinyl chloride-based resin composition (A) (powder) was fed into the single-screw extruder and extruded through the extrusion die under various conditions shown in Table 5 below, thereby producing a window frame molded product. The cylinder and die temperatures were appropriately selected so as to obtain an optimum appearance of the molded product.

Incidentally, the resin pressure (13a of Fig. 3) at an intake port of the gear pumps was set to not more than 30 kg/cm² to prevent heat generation in the extruder and the temperatures of the gear pumps were maintained at 160°C. The pressures and temperatures of the resin composition at respective portions of the gear pumps were measured to observe the resin temperature rise after passing through the gear pumps. The results are shown in Table 5.

### (A) Formula of rigid vinyl chloride-based resin composition:

- Vinyl chloride resin (average degree of polymerization: 800): 100 parts by weight
- Tin-based stabilizer: 3.0 parts by weight
- Lubricant (metal stearate): 2.3 parts by weight
- Filler (calcium carbonate): 10 parts by weight
- Processing aid (acryl-based resin): 3.0 parts by weight

### Comparative Example 2 (Experiments Nos. 24 to 26):

The same procedure as defined in Example 3 was conducted except that no gear pumps were used and that pellets and a powder of the rigid vinyl chloride-based resin composition (A) was fed into the extruder used in Example 3 and further the powder was separately fed into a conical type counter-rotating twin-screw extruder (L/D: 23; TEC47 manufactured by TOSHIBA KIKAI CO., LTD.), thereby producing window frame molded products having the same shape as those obtained in Example 3 under various conditions shown in Table 5. The pellets were produced by roll-kneading method which was most suitable for profile extrusion molding.

### Example 4 (Experiment No. 27) and Comparative Example 3 (Experiments Nos. 28 to 30):

The same procedures as defined in Example 3 and Comparative Example 2 were respectively conducted except that the below-mentioned rigid vinyl chloride-based resin composition (B) was used, thereby producing window frame molded products under various conditions shown in Table 6.

### (B) Formula of rigid vinyl chloride-based resin composition:

- Vinyl chloride resin (average degree of polymerization: 1,100): 100 parts by weight
- Lead-based stabilizer: 4.0 parts by weight
- Lubricant (metal stearate): 3.4 parts by weight
- Impact modifier (MBS impact modifier): 6.0 parts by weight
- Plasticizer: 1.0 part by weight
- Filler (calcium carbonate): 3.0 parts by weight
- Processing aid (acryl-based resin): 3.0 parts by weight

The thus produced window frame molded products were visually observed by eyes according to the above-mentioned evaluation method. Test samples cut from a 1 mm-thick portion of each window frame molded product were tested to measure a falling dart impact strength thereof. The results of the evaluations are shown in Tables 5 and 6.

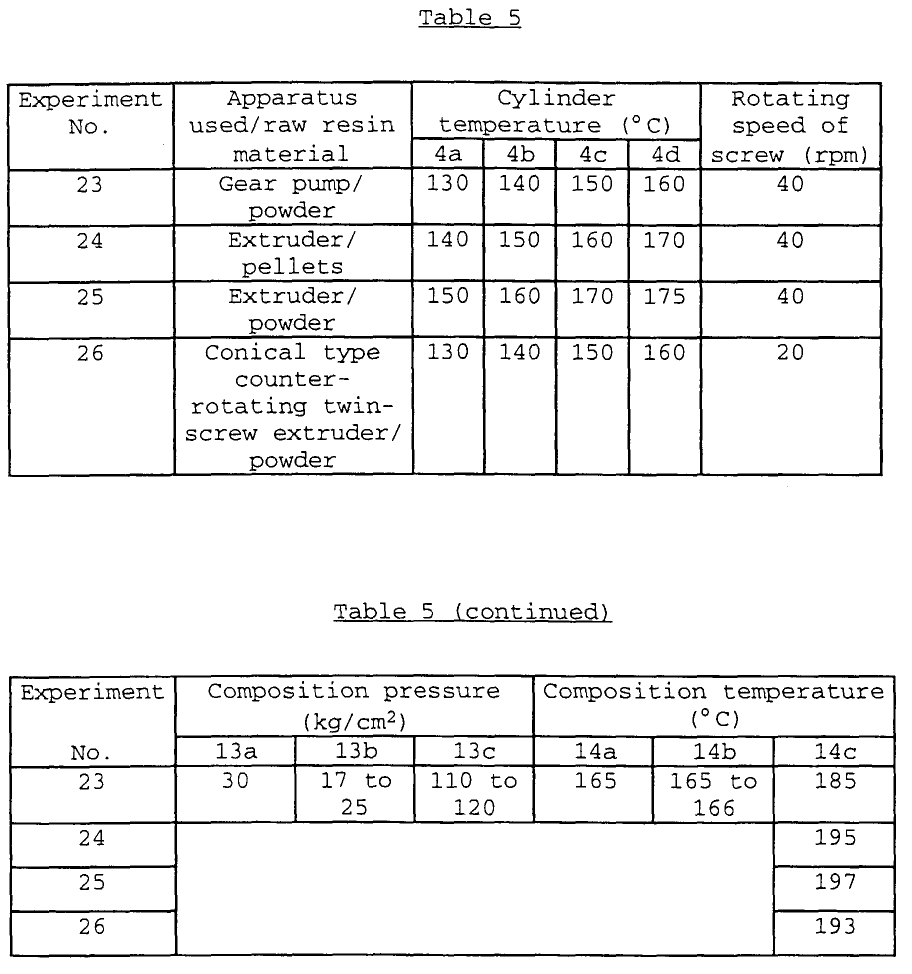

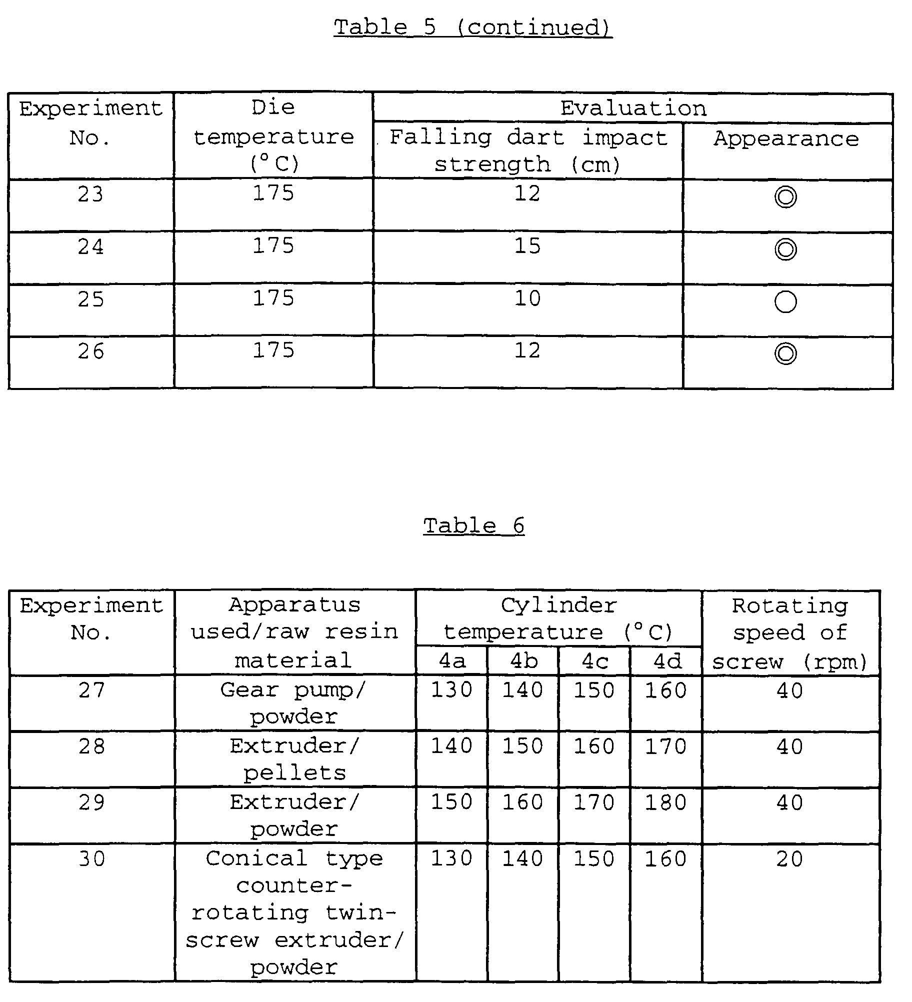

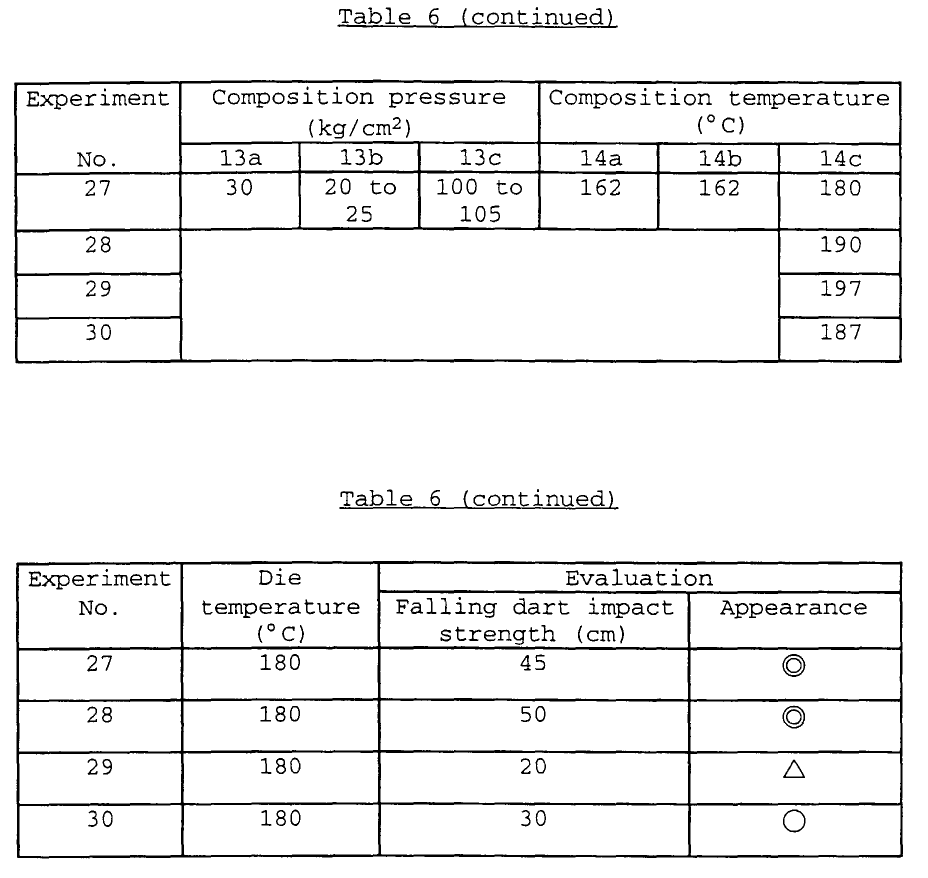

As is apparent from the results of Examples 3 and 4, even though a plurality of gear pumps were connected in series to each other, no temperature rise of the resin composition between adjacent gear pumps was caused, and the temperature rise thereof was caused only at a discharge port of the finally connected gear pump. Accordingly, it was confirmed that the use of a plurality of gear pumps connected in series to each other was extremely useful to knead and extrude the vinyl chloride-based resin composition at a low temperature.

It was also determined that in the case where a plurality of gear pumps are connected in series to each other, the obtained molded products were almost identical in their appearances but superior in falling dart impact strength to those obtained by using the conical type counter-rotating twin-screw extruder. The reason therefor is considered such that by passing through a plurality of gear pumps connected in series to each other, the resin composition was more sufficiently kneaded while applying a shear force thereto.

The molded products produced without passing the powder of the vinyl chloride-based resin composition through any gear pump, were poor in appearance and falling dart impact strength. Although it was attempted to extrude the powder of the vinyl chloride-based resin composition at a higher temperature to improve these properties, the falling dart impact strength of the molded products were unable to be improved. In addition, although the molded products produced by using the pellets were excellent in appearance and falling dart impact strength, it was required to conduct the molding process thereof at a high temperature. Therefore, from the standpoints of process and economy, such a molding process using the pellets is more disadvantageous as compared to the molding process according to the present invention in which the gear pumps are used and the molded product can be produced by directly molding the powder at a low temperature.

## Claims

1. A process for producing a granulated material or a molded product comprising a vinyl chloride-based resin, comprising:
feeding, under pressure, a powder of vinyl chloride-based resin composition into a gear pump unit in an unmolten state;
kneading said vinyl chloride-based resin composition in said gear pump unit while applying a shear force thereto; and
subjecting said vinyl chloride-based resin composition to extrusion-granulation or direct extrusion-molding.

2. A process according to claim 1, wherein said vinyl chloride-based resin composition is a rigid vinyl chloride-based resin composition.

3. A process according to claim 1, wherein said vinyl chloride-based resin composition is preheated before being fed under pressure into said gear pump unit.

4. A process according to claim 1, wherein the temperature of said vinyl chloride-based resin composition is controlled by a temperature-controlling mechanism provided in said gear pump unit.

5. A process according to claim 1, wherein said gear pump unit comprises at least two gear pumps.
